# EUROPEAN PATENT APPLICATION

(11) **EP 4 838 897 A1**
(43) Date of publication of application: **11.11.2026**
(21) Application number: 24934272.6
(22) Date of filing: 04.04.2024
(51) Int. Cl.: H04N 21/485, H04N 21/431, H04N 21/422, H04N 21/4223, H04N 21/45

(54) **IMAGE DISPLAY DEVICE AND CONTROL METHOD THEREFOR**

(71) Applicant: LG Electronics Inc., Yeongdeungpo-gu Seoul 07336 (KR)
(72) Inventor: LEE, Jaejun, Seoul 06772 (KR); KIM, Taehyoung, Seoul 06772 (KR); SHIN, Jonghwa, Seoul 06772 (KR); SEO, Seunghee, Seoul 06772 (KR)
(74) Representative: Vossius & Partner Patentanwälte Rechtsanwälte mbB
(86) International application number: PCT/KR2024/095686
(87) International publication number: WO 2025/211539

(57) **Abstract**

The purpose of the present invention is to make it intuitive and easy to set display quality according to a user's preferences, and the present invention may provide an image display device comprising: a display unit; a storage unit; an interface unit for connecting to at least one of an external device or an external server; and a control unit which displays a plurality of first example images in which a plurality of characteristics of a first image quality component have been respectively applied to a first template image, displays a plurality of second example images in which a plurality of characteristics of a second image quality component have been respectively applied to a second template image, and derives a user-preferred image quality setting value on the basis of a first image quality component characteristic corresponding to a first example image selected by a user from among the plurality of first example images and a second image quality component characteristic corresponding to a second image selected by the user from among the plurality of second example images, and saves the user-preferred image quality setting value.

## Description

### TECHNICAL FIELD

The present disclosure relates to an image display device that allows a user to configure display image quality settings, and a control method thereof.

### BACKGROUND

An image display device is a device with a function of receiving, processing, and displaying a digital image, such as a digital TV and a monitor.

In general, the display image quality of an image display device needs to be configured to meet a user's preference. Display image quality may be determined by a plurality of image quality components, such as gamma, contrast, and color temperature.

The image display device may provide an image quality setting interface that allows the user to configure display image quality according to the user's preference. The user may configure the user's preferred display image quality on the image display device by selecting a setting value for each of a plurality of image quality components through the image quality setting interface.

However, in many cases, a user does not have an intuitive understanding of how each of a plurality of image quality components affects the overall display image quality of the image display device. For example, an ordinary user may not fully understand what a gamma component or color temperature means.

Therefore, even if the image display device provides an image quality setting interface that allows each image quality component to be individually configured, it is often difficult for the user to configure desired display image quality through the image quality setting interface.

Image quality preferred by a user is greatly influenced by ambient light brightness. For example, it is uncertain whether an image quality setting that meets the user's preference in a bright environment will also meet the user's preference in a dark environment.

A user who uses a plurality of image display devices needs to configure the image quality of each image display device, and thus needs to expend considerable time and effort configuring the image quality of the plurality of image display devices.

### DISCLOSURE

### Technical Problem

The present disclosure has been proposed to solve the problems described above, and an object of the present disclosure is to provide an image display device and a control method thereof that allow a user to intuitively and conveniently configure display image quality according to the user's preference even when the user does not fully understand the meaning of each image quality component, allow an image quality setting value derived to meet the user's preference at one ambient light brightness to be utilized at another ambient light brightness, and allow an image quality setting value derived in one image display device to be utilized in another image display device.

### Technical Solution

To achieve the above object, an aspect of the present disclosure provides an image display device including a display, a storage unit, an interface configured to connect to at least one of an external device or an external server, and a controller configured to display a plurality of first example images in which a plurality of characteristics of a first image quality component are each applied to a first template image, display a plurality of second example images in which a plurality of characteristics of a second image quality component are each applied to a second template image, and derive and store a user-preferred image quality setting value based on a first image quality component characteristic corresponding to a first example image selected by a user among the plurality of first example images and a second image quality component characteristic corresponding to a second example image selected by the user among the plurality of second example images.

The controller may perform control to display the plurality of second example images in response to a first example image being selected by the user.

The first image quality component characteristic corresponding to the selected first example image may be applied to the plurality of second example images.

The controller may display a plurality of third example images in which a plurality of characteristics of a third image quality component are each applied to a third template image, and derive the user-preferred image quality setting value based further on a third image quality component characteristic corresponding to a third example image selected by the user among the plurality of third example images.

The controller may perform control to display the plurality of third example images in response to a second example image being selected by the user.

The first image quality component characteristic corresponding to the selected first example image and the second image quality component characteristic corresponding to the selected second example image may be applied to the plurality of third example images.

The image display device may further include an ambient light sensor, and the controller may store ambient light brightness at a time of deriving the user-preferred image quality setting value as reference ambient light brightness of the user-preferred image quality setting value.

The controller may correct the user-preferred image quality setting value based on a comparison between ambient light brightness currently detected by the ambient light sensor and the reference ambient light brightness, and apply the corrected user-preferred image quality setting value to the display.

The controller may store display specification information of the display as reference display specification information of the user-preferred image quality setting value.

The controller may perform control to upload the user-preferred image quality setting value, the reference ambient light brightness, and the reference display specification information to the external server.

The image display device may further include a camera, and the controller may identify the user by recognizing the user's face captured through the camera and derive and store a user-preferred image quality setting value for each user.

To achieve the above object, an aspect of the present disclosure provides an image display device including a display, a storage unit, an interface configured to connect to at least one of an external device or an external server, and a controller configured to perform control to download a user-preferred image quality setting value and reference display specification information from the external server, and correct the user-preferred image quality setting value based on a comparison between the reference display specification information and specification information of the display, and apply the corrected user-preferred image quality setting value to the display.

To achieve the above object, an aspect of the present disclosure provides a control method of an image display device, including displaying a plurality of first example images in which a plurality of characteristics of a first image quality component are each applied to a first template image, displaying a plurality of second example images in which a plurality of characteristics of a second image quality component are each applied to a second template image, and deriving and storing a user-preferred image quality setting value based on a first image quality component characteristic corresponding to a first example image selected by a user among the plurality of first example images and a second image quality component characteristic corresponding to a second example image selected by the user among the plurality of second example images.

To achieve the above object, an aspect of the present disclosure provides a control method of an image display device, including connecting to an external server, downloading a user-preferred image quality setting value and reference display specification information from the external server, and correcting the user-preferred image quality setting value based on a comparison between the reference display specification information and specification information of a display, and applying the corrected user-preferred image quality setting value to the display.

### Advantageous Effects

Effects of an image display device and a control method thereof according to the present disclosure are described as follows.

According to at least one of the various aspects of the present disclosure, a user may intuitively and conveniently configure display image quality according to the user's preference, even if the user does not fully understand the meaning of each of a plurality of image quality components that determine the image quality.

Further, according to at least one of various aspects of the present disclosure, an image quality setting value derived to match a user's preference at one ambient light brightness may also be utilized at a different ambient light brightness, thereby eliminating the need for the user to perform display image quality configuration each time the ambient light brightness changes to match the user's preference.

According to at least one of various aspects of the present disclosure, an image quality setting value derived in one image display device may also be utilized in another image display device, thereby eliminating the need for a user using a plurality of image display devices to individually perform display image quality configuration for each image display device to match the user's preference.

### BRIEF DESCRIPTION OF THE DRAWINGS

FIG. 1 is a schematic block diagram of an image display device according to an embodiment of the present disclosure.
FIG. 2 illustrates an image display device and an external device according to an aspect of the present disclosure.
FIG. 3 illustrates an exemplary screen for allowing a user to configure display image quality in a conventional image display device.
FIG. 4 illustrates a flowchart of a process of configuring display image quality of an image display device according to an aspect of the present disclosure.
FIG. 5 illustrates a method for initiating the image quality setting process of FIG. 4.
FIGS. 6 to 13 show examples of image quality setting screens that may be displayed during the image quality setting process of FIG. 4.
FIG. 14 illustrates an exemplary screen for allowing a user to configure display image quality in an image display device according to an aspect of the present disclosure.
FIG. 15 illustrates a flowchart of a process of applying a user-preferred image quality setting value in an image display device according to an aspect of the present disclosure.
FIG. 16 illustrates a flowchart of a process of configuring display image quality of an image display device according to an aspect of the present disclosure.
FIG. 17 illustrates an image display device and an external device according to an aspect of the present disclosure.
FIG. 18 illustrates a flowchart of a process of applying a user-preferred image quality setting value in an image display device according to an aspect of the present disclosure.
FIG. 19 illustrates an example of an analysis of a user-preferred image quality tendency according to an aspect of the present disclosure.

### MODE FOR INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

The terms "module" and "unit" attached to describe the names of components are used herein to help the understanding of the components and thus should not be considered as having specific meanings or roles. Accordingly, the terms "module" and "unit" may be used interchangeably.

In addition, each of these elements may be configured as a separate individual hardware module or implemented as two or more hardware modules. Two or more elements may be implemented as a single hardware module. In some cases, at least one of these elements may be implemented as software.

Aspects of this disclosure will be described in detail with reference to the attached drawings, but it should be understood that they are merely illustrative of this disclosure and should not be interpreted as limiting the scope of this disclosure.

In addition, although the terms used in this disclosure are selected from generally known and used terms, some of the terms mentioned in the description of this disclosure, the detailed meanings of which are described in relevant parts of the description herein, have been selected at the discretion of the applicant. Furthermore, this disclosure must be understood, not simply by the actual terms used but by the meanings of each term lying within.

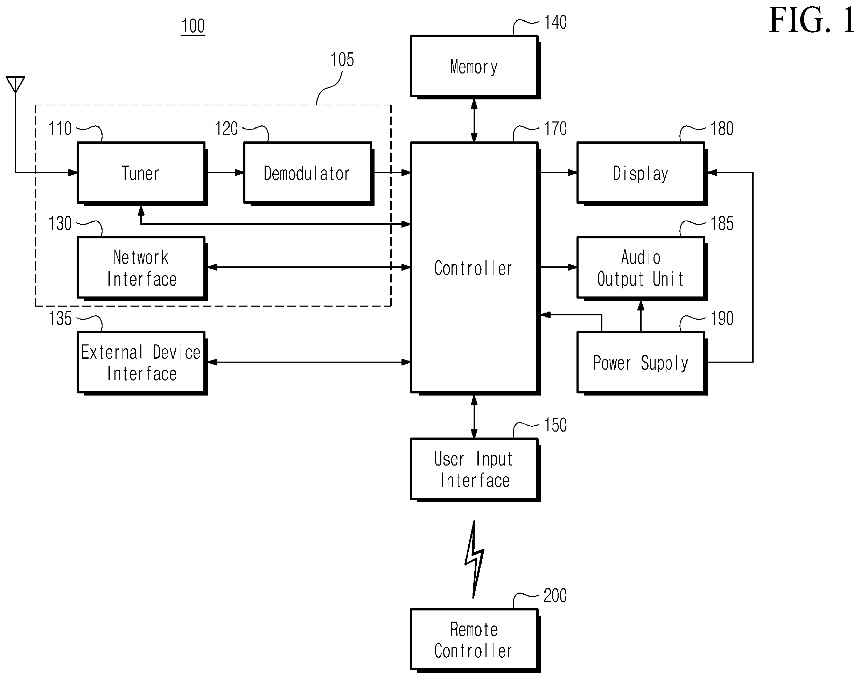

FIG. 1 is a schematic block diagram of an image display device according to one embodiment of the present disclosure. The image display device may be a display device capable of outputting an image including a display panel. The image display device may include a computer monitor, a TV, a projector, a smartphone, a laptop, a digital signage, etc.

Referring to FIG. 1, an image display device 100 according to one aspect of this disclosure includes a broadcast receiver 105, an external device interface 135, a memory 140, a user input interface 150, a controller 170, a display 180, an audio output unit 185, a power supply 190, and a camera module (not shown). When the image display device 100 is a computer monitor, it may not include at least one of the broadcast receiver 105, the audio output unit 183, and the camera unit.

The broadcasting receiver 105 may include a tuner 110, a demodulator 120 and a network interface 130. As needed, the broadcasting receiver 105 may be configured so as to include only the tuner 110 and the demodulator 120 or only the network interface 130.

The tuner 110 tunes to a Radio Frequency (RF) broadcast signal corresponding to a channel selected by a user from among a plurality of RF broadcast signals received through an antenna and downconverts the tuned RF broadcast signal into a digital Intermediate Frequency (IF) signal or an analog baseband video or audio signal.

More specifically, if the tuned RF broadcast signal is a digital broadcast signal, the tuner 110 downconverts the tuned RF broadcast signal into a digital IF signal DIF. On the other hand, if the tuned RF broadcast signal is an analog broadcast signal, the tuner 110 downconverts the tuned RF broadcast signal into an analog baseband video or audio signal CVBS/SIF. That is, the tuner 110 may be a hybrid tuner capable of processing not only digital broadcast signals but also analog broadcast signals. The analog baseband video or audio signal CVBS/SIF may be directly input to the controller 170.

The tuner 110 may be capable of receiving RF broadcast signals from an Advanced Television Systems Committee (ATSC) single-carrier system or from a Digital Video Broadcasting (DVB) multi-carrier system.

The tuner 110 may sequentially tune to a number of RF broadcast signals corresponding to all broadcast channels previously stored by a channel storage function from a plurality of RF signals received through the antenna and may downconvert the tuned RF broadcast signals into IF signals or baseband video or audio signals.

The demodulator 120 receives the digital IF signal DIF from the tuner 110 and demodulates the digital IF signal DIF.

For example, if the digital IF signal DIF is an ATSC signal, the demodulator 120 may perform 8-Vestigal SideBand (VSB) demodulation on the digital IF signal DIF. The demodulator 120 may also perform channel decoding. For channel decoding, the demodulator 120 may include a Trellis decoder (not shown), a de-interleaver (not shown) and a Reed-Solomon decoder (not shown) so as to perform Trellis decoding, de-interleaving and Reed-Solomon decoding.

For example, if the digital IF signal DIF is a DVB signal, the demodulator 120 performs Coded Orthogonal Frequency Division Multiple Access (COFDMA) demodulation upon the digital IF signal DIF. The demodulator 120 may also perform channel decoding. For channel decoding, the demodulator 120 may include a convolution decoder (not shown), a de-interleaver (not shown), and a Reed-Solomon decoder (not shown) so as to perform convolution decoding, de-interleaving, and Reed-Solomon decoding.

The demodulator 120 may perform demodulation and channel decoding on the digital IF signal DIF, thereby obtaining a Transport Stream (TS). The TS may be a signal in which a video signal, an audio signal and a data signal are multiplexed. For example, the TS may be an MPEG-2 TS in which an MPEG-2 video signal and a Dolby AC-3 audio signal are multiplexed. An MPEG-2 TS may include a 4-byte header and a 184-byte payload.

In order to properly handle not only ATSC signals but also DVB signals, the demodulator 120 may include an ATSC demodulator and a DVB demodulator.

The TS output from the demodulator 120 may be input to the controller 170 and thus subjected to demultiplexing and A/V signal processing. The processed video and audio signals are output to the display 180 and the audio output unit 185, respectively.

The external device interface 135 may serve as an interface between an external device and the image display device 100. For interfacing, the external device interface 135 may include an A/V Input/Output (I/O) unit (not shown) and/or a wireless communication module (not shown).

The external device interface 135 may be connected to an external device such as a Digital Versatile Disc (DVD) player, a Blu-ray player, a game console, a camera, a camcorder, or a computer (e.g., a laptop computer), wirelessly or by wire. Then, the external device interface 135 externally receives video, audio, and/or data signals from the external device and transmits the received input signals to the controller 170. In addition, the external device interface 135 may output video, audio, and data signals processed by the controller 170 to the external device. In order to receive or transmit audio, video and data signals from or to the external device, the external device interface 135 includes the A/V I/O unit (not shown) and/or the wireless communication module (not shown).

The A/V I/O unit may include a Universal Serial Bus (USB) port, a Composite Video Blanking Sync (CVBS) port, a Component port, a Super-video (S-video) (analog) port, a Digital Visual Interface (DVI) port, a High-Definition Multimedia Interface (HDMI) port, a Red-Green-Blue (RGB) port, and a D-sub port, in order to input the video and audio signals of the external device to the image display device 100.

The wireless communication module may perform short-range wireless communication with other electronic devices. For short-range wireless communication, the wireless communication module may use Bluetooth, Radio-Frequency IDentification (RFID), Infrared Data Association (IrDA), Ultra WideBand (UWB), ZigBee, and Digital Living Network Alliance (DLNA) communication standards.

The external device interface 135 may be connected to various set-top boxes through at least one of the above-described ports and may thus perform an I/O operation with the various set-top boxes.

The external device interface 135 may receive applications or an application list from an adjacent external device and provide the applications or the application list to the controller 170 or the memory 140.

The network interface 130 serves as an interface between the image display device 100 and a wired/wireless network such as the Internet. The network interface 130 may include an Ethernet port for connection to a wired network. For connection to wireless networks, the network interface 130 may use Wireless Local Area Network (WLAN) (i.e., Wi-Fi), Wireless Broadband (WiBro), World Interoperability for Microwave Access (WiMax), and High Speed Downlink Packet Access (HSDPA).

The network interface 130 may transmit data to or receive data from another user or electronic device over a connected network or another network linked to the connected network. Especially, the network interface 130 may transmit data stored in the image display device 100 to a user or electronic device selected from among users or electronic devices pre-registered with the image display device 100.

The network interface 130 may access a specific Web page over a connected network or another network linked to the connected network. That is, the network interface 130 may access a specific Web page over a network and transmit or receive data to or from a server. Additionally, the network interface 130 may receive content or data from a CP or an NP. Specifically, the network interface 130 may receive content such as movies, advertisements, games, VoD, and broadcast signals, and information related to the content from a CP or an NP. Also, the network interface 130 may receive update information about firmware from the NP and update the firmware. The network interface 130 may transmit data over the Internet or to the CP or the NP.

The network interface 130 may selectively receive a desired application among open applications over a network.

In an aspect of this disclosure, when a game application is executed in the image display device, the network interface 130 may transmit data to or receive data from a user terminal connected to the image display device through a network. In addition, the network interface 130 may transmit specific data to or receive specific data from a server that records game scores.

The memory 140 may store various programs necessary for the controller 170 to process and control signals, and may also store processed video, audio and data signals.

The memory 140 may temporarily store a video, audio and/or data signal received from the external device interface 135 or the network interface 130. The memory 140 may store information about broadcast channels by the channel storage function.

The memory 140 may store applications or a list of applications received from the external device interface 135 or the network interface 130.

In an aspect of this disclosure, when the image display device provides a game application, the memory 140 may store user-specific information and game play information of a user terminal used as a game controller.

The memory 140 may include, for example, at least one of a flash memory-type storage medium, a hard disk-type storage medium, a multimedia card micro-type storage medium, a card-type memory (e.g. a Secure Digital (SD) or eXtreme Digital (XD) memory), a Random Access Memory (RAM), or a Read-Only Memory (ROM) such as an Electrically Erasable and Programmable Read Only Memory (EEPROM). The image display device 100 may reproduce content stored in the memory 140 (e.g. video files, still image files, music files, text files, and application files) to the user.

While the memory 140 is shown in FIG. 1 as configured separately from the controller 170, to which this disclosure is not limited, the memory 140 may be incorporated into the controller 170, for example.

The user input interface 150 transmits a signal received from the user to the controller 170 or transmits a signal received from the controller 170 to the user.

For example, the user input interface 150 may receive control signals such as a power-on/off signal, a channel selection signal, and a screen setting signal from a remote controller 200 or may transmit a control signal received from the controller 170 to the remote controller 200, according to various communication schemes, for example, RF communication and IR communication.

For example, the user input interface 150 may provide the controller 170 with control signals received from local keys (not shown), such as inputs of a power key, a channel key, and a volume key, and setting values.

Also, the user input interface 150 may transmit a control signal received from a sensor unit (not shown) for sensing a user gesture to the controller 170 or transmit a signal received from the controller 170 to the sensor unit. The sensor unit may include a touch sensor, a voice sensor, a position sensor, a motion sensor, etc.

The controller 170 may demultiplex the TS received from the tuner 110, the demodulator 120, or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be audibly output through the audio output unit 185. Also, the audio signal processed by the controller 170 may be transmitted to the external output device through the external device interface 135.

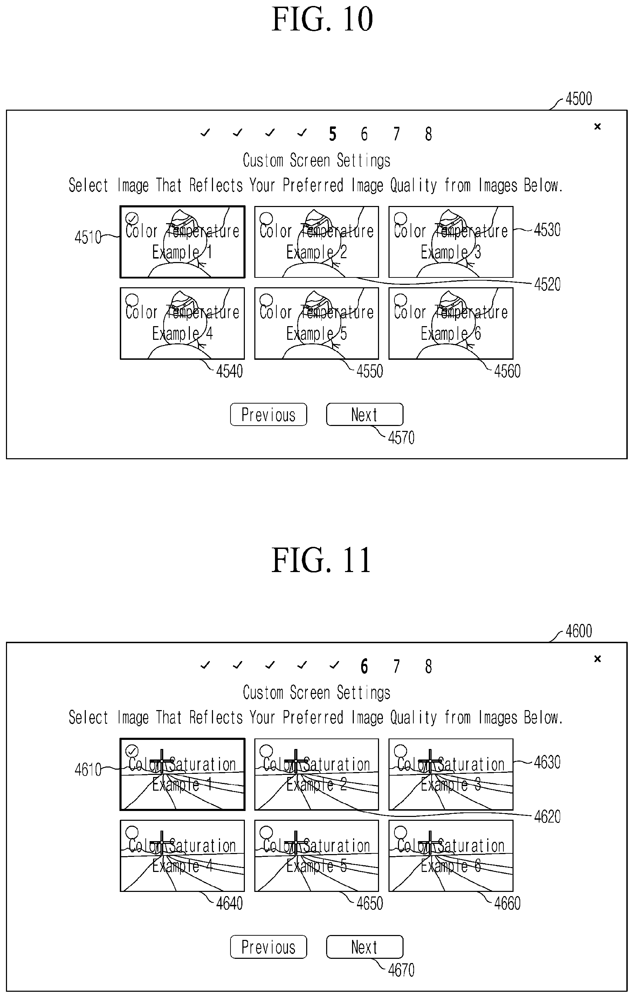

While not shown in FIG. 1, the controller 170 may include a DEMUX and a video processor, which will be described later with reference to FIG. 10.

In addition, the controller 170 may provide overall control to the image display device 100. For example, the controller 170 may control the tuner 110 to tune to an RF broadcast signal corresponding to a user-selected channel or a pre-stored channel.

The controller 170 may control the image display device 100 according to a user command received through the user input interface 150 or according to an internal program. Especially the controller 170 may access a network and download an application or application list selected by the user to the image display device 100 over the network.

For example, the controller 170 controls the tuner 110 to receive a signal of a channel selected according to a specific channel selection command received through the user input interface 150 and processes a video, audio and/or data signal of the selected channel. The controller 170 outputs the processed video or audio signal along with information about the user-selected channel to the display 180 or the audio output unit 185.

As another example, the controller 170 outputs a video or audio signal received from an external device such as a camera or a camcorder through the external device interface 135 to the display 180 or the audio output unit 185 according to an external device video playback command received through the external device interface 150.

The controller 170 may control the display 180 to display images. For instance, the controller 170 may control the display 180 to display a broadcast image received from the tuner 110, an externally input image received through the external device interface 135, an image received through the network interface 130, or an image stored in the memory 140. The image displayed on the display 180 may be a Two-Dimensional (2D) or Three-Dimensional (3D) still image or moving picture.

The controller 170 may control content playback. The content may include any content stored in the image display device 100, received broadcast content, and externally input content. The content includes at least one of a broadcast image, an externally input image, an audio file, a still image, a Web page, or a text file.

Upon receipt of a return-to-home screen input, the controller 170 may control display of the home screen on the display 180.

The home screen may include a plurality of card objects classified according to content sources. The card objects may include at least one of a card object representing a thumbnail list of broadcast channels, a card object representing a broadcast program guide, a card object representing a program reservation list or a program recording list, or a card object representing a media list of a device connected to the image display device. The card objects may further include at least one of a card object representing a list of connected external devices or a card object representing a call-associated list.

The home screen may further include an application menu including at least one application that can be executed.

Upon receipt of a card object move input, the controller 170 may control movement of a card object corresponding to the card object move input on the display 180, or if the card object is not displayed on the display 180, the controller 170 may control display of the card object on the display 180.

When a card object is selected from among the card objects on the home screen, the controller 170 may control display of an image corresponding to the selected card object on the display 180.

The controller 170 may control display of an input broadcast image and an object representing information about the broadcast image in a card object representing broadcast images. The size of the broadcast image may be set to a fixed size.

The controller 170 may control display of a set-up object for at least one of image setting, audio setting, screen setting, reservation setting, setting of a pointer of the remote controller, or network setting on the home screen.

The controller 170 may control display of a log-in object, a help object, or an exit object on a part of the home screen.

The controller 170 may control display of an object representing the total number of available card objects or the number of card objects displayed on the display 180 among all card objects, on a part of the home screen.

If one of the card objects displayed on the display 180 is selected, the controller 170 may fullscreen the selected card object to cover the entirety of the display 180.

Upon receipt of an incoming call at a connected external device or the image display device 100, the controller 170 may control focusing-on or shift of a call-related card object among the plurality of card objects.

If an application view menu item is selected, the controller 170 may control display of applications or a list of applications that are present in the image display device 100 or downloadable from an external network.

The controller 170 may control installation and execution of an application downloaded from the external network along with various UIs. Also, the controller 170 may control display of an image related to the executed application on the display 180, upon user selection.

Although not shown, the image display device 100 may further include a channel browsing processor for generating thumbnail images corresponding to channel signals or externally input signals.

The channel browsing processor may receive the TS output from the demodulator 120 or the TS output from the external device interface 135, extract images of the received TS and generate thumbnail images. The thumbnail images may be directly output to the controller 170 or may be output after being encoded. Also, it is possible to encode the thumbnail images into a stream and output the stream to the controller 170. The controller 170 may display a thumbnail list including a plurality of received thumbnail images on the display 180. The thumbnail images may be updated sequentially or simultaneously in the thumbnail list. Therefore, the user can readily identify the content of broadcast programs received through a plurality of channels.

The display 180 may convert a processed video signal, a processed data signal, and an OSD signal received from the controller 170 or a video signal and a data signal received from the external device interface 135 into RGB signals, thereby generating driving signals.

The display 180 may be various types of displays such as a Plasma Display Panel (PDP), a Liquid Crystal Display (LCD), an Organic Light-Emitting Diode (OLED) display, a flexible display, and a 3D display.

The display 180 may also be a touchscreen that can be used not only as an output device but also as an input device.

The audio output unit 185 may receive a processed audio signal (e.g., a stereo signal, a 3.1-channel signal or a 5.1-channel signal) from the controller 170 and output the received audio signal as sound. The audio output unit 185 may employ various speaker configurations.

To sense a user gesture, the image display device 100 may further include the sensor unit (not shown) that has at least one of a touch sensor, a voice sensor, a position sensor, and a motion sensor, as stated before. A signal sensed by the sensor unit may be output to the controller 170 through the user input interface 150.

The image display device 100 may further include the camera unit (not shown) for capturing images of a user. Image information captured by the camera unit may be input to the controller 170.

The controller 170 may sense a user gesture from an image captured by the camera unit or a signal sensed by the sensor unit, or by combining the captured image and the sensed signal.

The power supply 190 supplies power to the image display device 100.

Particularly, the power supply 190 may supply power to the controller 170 which may be implemented as a System On Chip (SOC), the display 180 for displaying an image, and the audio output unit 185 for audio output.

For supplying power, the power supply 190 may include a converter (not shown) for converting Alternating Current (AC) into Direct Current (DC). If the display 180 is configured with, for example, a liquid crystal panel having a plurality of backlight lamps, the power supply 190 may further include an inverter (not shown) capable of performing Pulse Width Modulation (PWM) for luminance change or dimming driving.

The remote controller 200 transmits a user input to the user input interface 150. For transmission of user input, the remote controller 200 may use various communication techniques such as Bluetooth, RF communication, IR communication, Ultra Wideband (UWB) and ZigBee.

In addition, the remote controller 200 may receive a video signal, an audio signal or a data signal from the user input interface 150 and output the received signals visually, audibly or as vibrations.

The above-described image display device 100 may be a fixed digital broadcast receiver capable of receiving at least one of ATSC (8-VSB) broadcast programs, DVB-T (COFDM) broadcast programs, and ISDB-T (BST-OFDM) broadcast programs.

The block diagram of the image display device 100 illustrated in FIG. 1 is purely exemplary. Depending upon the specifications of the image display device 100 in actual implementation, the components of the image display device 100 may be combined or omitted or new components may be added. That is, two or more components may be incorporated into one component or one component may be configured as separate components, as needed. In addition, the function of each block is described for the purpose of describing the aspect of this disclosure and thus specific operations or devices should not be construed as limiting the scope and spirit of this disclosure.

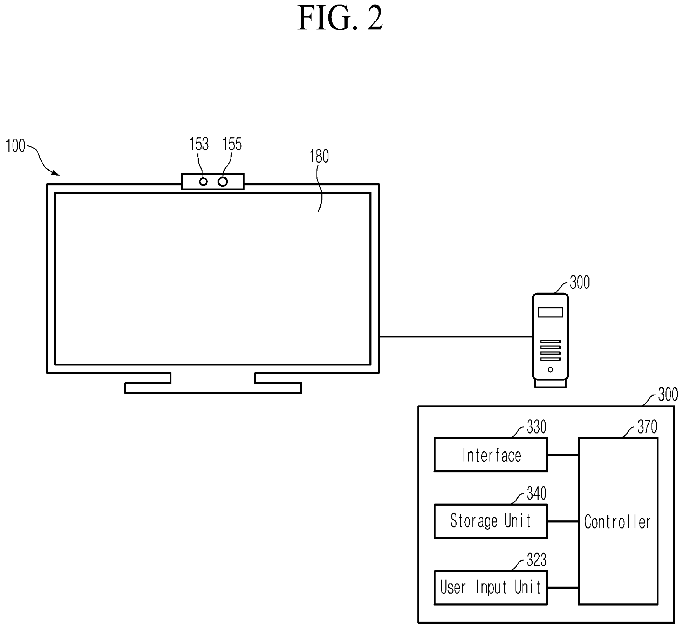

Hereinafter, the image display device 100 of FIG. 1 will be described in further detail with reference to FIG. 2. FIG. 2 illustrates an image display device and an external device according to an aspect of the present disclosure.

Referring to FIG. 2, the image display device 100 may further include an ambient light sensor 153 and a camera 155 positioned to face forward.

Although not shown, the image display device 100 may further include a user input unit (not shown) configured to receive a command or information from a user. The user input unit may include a mechanical input device (e.g., buttons, a dome switch, a jog wheel, or a jog switch located on a front surface, rear surface, or side surface of the image display device 100) and/or a touch input device. For example, the touch input device may include a virtual key, a soft key, or a visual key that is displayed on the display 180 through software processing.

The image display device 100 may be connected to an external device 300 in a wired (or wireless) manner through the external device interface 135. For example, the image display device 100 may be connected to the external device 300 in a wired manner using high definition multimedia interface (HDMI), DisplayPort (DP), universal serial bus (USB), digital visual interface (DVI), or D-subminiature (D-SUB). The image display device 100 may communicate with the external device 300 according to the display data channel command interface (DDCCI) standard.

The image display device 100 may be connected to an external device 300 in a wired (or wireless) manner through a network interface 130.

The image display device 100 may receive and output image-related signals or data from the external device 300 through the external device interface 135 or the network interface 130. The image display device 100 may transmit various pieces of information or data to the external device 300 through the external device interface 135 or the network interface 130.

The external device 300 may be, for example, but is not limited to, a computer, a laptop computer, or a smartphone.

The external device 300 may include a user input unit 323, an interface 330, a storage unit 340, and a controller 370.

The user input unit 323 is for receiving commands or information from the user and may include a mechanical input device and/or a touch input device. For example, the touch input device may include a virtual key, a soft key, or a visual key that is displayed through software processing.

The interface 330 serves as a communication path between the external device 300 and various types of devices (e.g., an image display device) connected to the external device 300. The interface 330 may include at least one of a wired/wireless headset port, an external charger port, a wired/wireless data port, a memory card port, a port for connecting a device provided with an identification module, an audio input/output (I/O) port, a video I/O port, an earphone port, and a wired/wireless communication unit. In response to the connection of another device to the interface 330, the external device 300 may perform appropriate control related to the connected other device.

The external device 300 may be connected to the image display device 100 in a wired (or wireless) manner through the interface 330.

The storage unit 340 stores data that supports various functions of the external device 300. The storage unit 340 may store a number of applications (application programs or applications) executed in the external device 300, and data and instructions for operating the external device 300. At least some of these application programs may be downloaded from an external server via wireless communication. The application programs may be stored in the storage unit 340 and installed on the external device 300, and may be executed by the controller 370 to perform the operations (or functions) of the external device 300.

In addition to operations related to the application program, the controller 370 typically controls the overall operation of the external device 300. The controller 370 may process various signals, data, information, and the like or execute the application program stored in the storage unit 340, thereby providing the user with appropriate information or functions or processing the appropriate information or functions.

In a broad sense, the image display device 100 and the external device 300 may be understood as a single image display device.

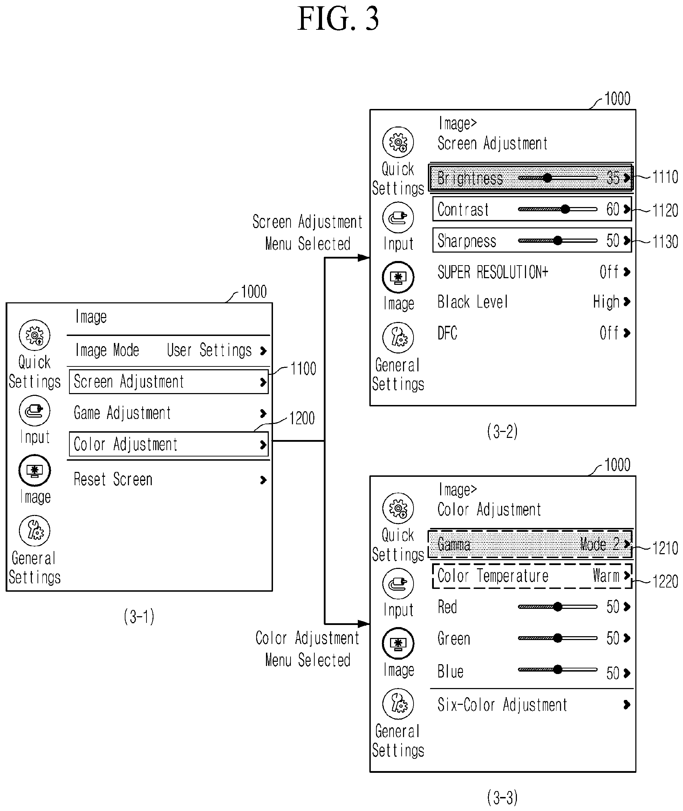

Hereinafter, with reference to FIG. 3, a method of configuring display image quality by a user in a conventional image display device will be described. FIG. 3 illustrates an exemplary screen for allowing a user to configure display image quality in a conventional image display device.

As shown in (3-1) of FIG. 3, an image quality setting screen 1000 may be displayed on the image display device. The image quality setting screen 1000 may be displayed in response to a user command for configuring display image quality that is input to the image display device 100. The image quality setting screen 1000 may be displayed on the display 180 in an on-screen display (OSD) manner, either as a full screen or a partial screen.

A plurality of menus may be displayed on the image quality setting screen 1000, and among the plurality of menus, a screen adjustment menu 1100 and a color adjustment menu 1200 will be described below.

When the screen adjustment menu 1100 is selected by the user in the image quality setting screen 1000 of (3-1) of FIG. 3, the image quality setting screen 1000 may display sub-menus for individually configuring a plurality of image quality components, such as a brightness menu 1110, a contrast menu 1120, and a sharpness menu 1130, as shown in (3-2) of FIG. 3.

When the color adjustment menu 1200 is selected by the user in the image quality setting screen 1000 of (3-1) of FIG. 3, the image quality setting screen 1000 may display sub-menus for individually configuring another plurality of image quality components, such as a gamma menu 1210 and a color temperature menu 1220, as shown in (3-3) of FIG. 3.

However, because the user may not fully understand what each of the plurality of image quality components represents, even if the user individually configures the respective image quality components, it may be difficult for the user to intuitively recognize how such configurations affect the overall display image quality of the image display device.

Although not shown, a plurality of image quality modes that are preset by a manufacturer of the image display device at the time of shipment from the factory (e.g., movie mode and reading mode) may be displayed on the image quality setting screen 1000, and the display image quality configuration may be determined according to an image quality mode selected by the user.

However, it may be inconvenient for the user because, in many cases, none of the plurality of image quality modes satisfactorily matches the user's preference.

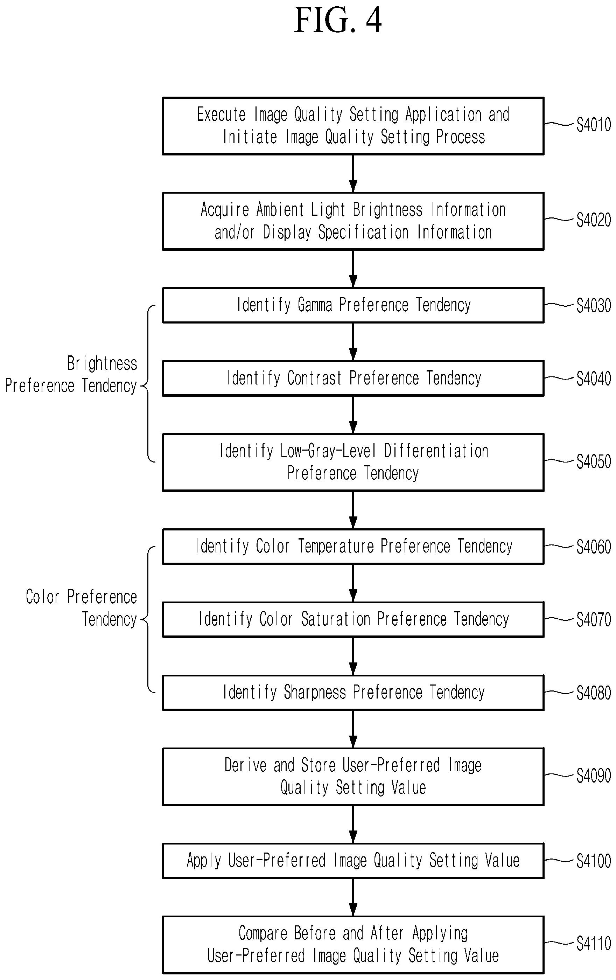

Hereinafter, with reference to FIG. 4, a method of configuring display image quality in a simpler manner while allowing the configured display image quality to better match a user's preference will be described. FIG. 4 illustrates a flowchart of a process of configuring display image quality of an image display device according to an aspect of the present disclosure.

First, an image quality setting application according to the present disclosure may be executed, and an image quality setting process according to the executed image quality setting application may be initiated (S4010). The image quality setting application may be stored in the storage unit 140 of the image display device 100 or in the storage unit 340 of the external device 300.

The controller 170 of the image display device 100 may execute the image quality setting application and control an execution screen thereof to be displayed on the display 180 of the image display device 100.

Alternatively, the controller 370 of the external device 300 may execute the image quality setting application and transmit the execution screen to the image display device 100, and the controller 170 of the image display device 100 may receive the execution screen of the image quality setting application and control the execution screen to be displayed on the display 180.

The image quality setting application may be executed on either the image display device 100 or the external device 300, and thus the following description will be provided from the perspective of the image quality setting application executed on either the image display device 100 or the external device 300.

The image quality setting application may obtain current ambient light brightness information and/or display specification information of the image display device 100 from the image display device 100 (S4020). Operation S4020 may be performed before the image quality setting process is initiated.

The display specification information may include, for example, at least one of a display type, a resolution, and a maximum output brightness. The use of ambient light brightness information and/or display specification information will be described later. When the ambient light brightness information and/or the display specification information are not utilized, operation S4020 may be omitted.

The image quality setting application may sequentially provide a plurality of image quality setting screens to determine the user's preferred image quality (i.e., user-customized image quality) (S4030 to S4080). The plurality of image quality setting screens may correspond to a plurality of image quality components that constitute the image quality, respectively. In other words, each image quality setting screen is for identifying the user's preference tendency for a corresponding image quality component.

First, the image quality setting application may provide an image quality setting screen to determine the user's tendency for image quality components mainly related to brightness (S4030, S4040, and S4050).

To this end, for example, the image quality setting application may sequentially provide a gamma setting screen, a contrast setting screen, and a low-gray-level differentiation setting screen. Regarding brightness, as shown in FIG. 4, the user's tendency may be identified in the order of gamma (S4030), contrast (S4040), and low-gray-level differentiation (S4050), but the user's tendencies may be identified in a different order. With regard to brightness, an additional image quality setting screen may be provided to determine the user's tendencies regarding image quality components other than these components, and at least one of the image quality setting screens described above may be omitted.

Then, the image quality setting application may provide an image quality setting screen to determine the user's tendency for image quality components mainly related to color (S4060, S4070, and S4080).

To this end, for example, the image quality setting application may sequentially provide a color temperature setting screen, a color saturation setting screen, and a sharpness setting screen. Regarding color, as shown in FIG. 4, the user's tendencies may be identified in the order of color temperature (S4060), color saturation (S4070), and sharpness (S4080), but the user's tendency may be identified in a different order. With regard to color, an additional image quality setting screen may be provided to determine the user's tendencies regarding image quality components other than these components, and at least one of the image quality setting screens may be omitted.

The image quality setting application may derive a user-preferred image quality setting value (i.e., user-customized image quality setting value) based on the user's tendencies regarding brightness and color identified through a plurality of image quality setting screens and store the user-preferred image quality setting value in the storage unit 140 of the image display device 100 and/or the storage unit 340 of the external device 300 (S4090). The user-preferred image quality setting value may include an individual setting value for each of the plurality of image quality components.

The image quality setting application may apply the derived user-preferred image quality setting value to the image display device 100 (S4100). The image display device 100 may output a screen according to the applied image quality setting value.

Meanwhile, to allow the user to intuitively recognize the derived user-preferred image quality setting value, the image quality setting application may alternately or simultaneously output an image-quality-setting-value-applied image obtained by applying the derived user-preferred image quality setting value to an example image and an image-quality-setting-value-unapplied image obtained without applying the derived user-preferred image quality setting value to the same example image, both images being based on the same example image (S4110).

The order of operation S4100 above and operation S4110 above may be reversed.

When the image quality setting process described above is repeatedly performed by the same user, the user's image quality preference tendencies accumulated through the repeated performance may be analyzed, image quality component items expected to correspond to the user's preferences may be automatically selected, and a user selection may be received only for image quality component items for which no clear tendency has been identified.

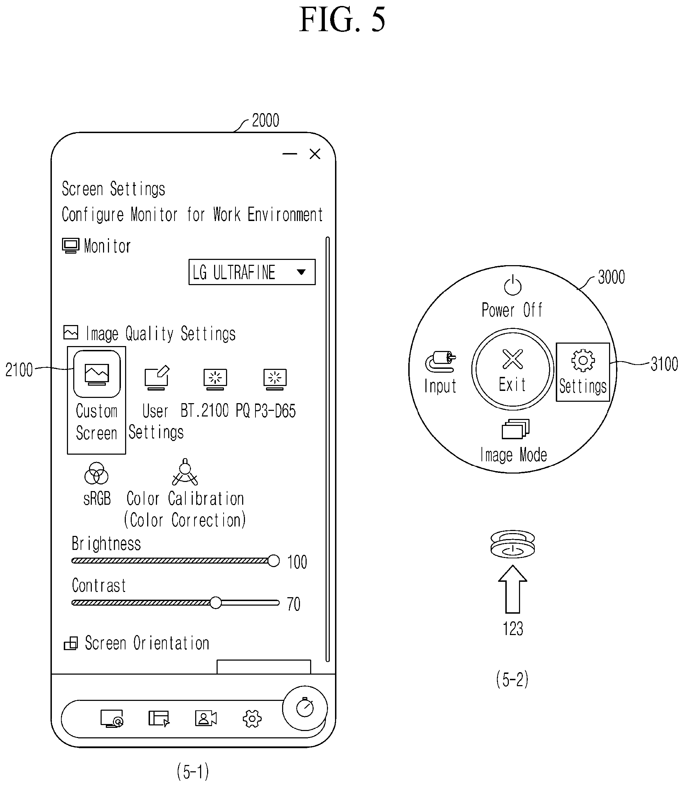

Hereinafter, with reference to FIG. 5, initiation of an image quality setting process according to an aspect of the present disclosure will be described. FIG. 5 illustrates a method for initiating the image quality setting process of FIG. 4.

As shown in (5-1) of FIG. 5, when the image quality setting application is executed, an image quality setting application execution screen 2000 may be displayed on the display 180 of the image display device 100.

The image quality setting process of FIG. 4 may be initiated in response to a user command to select a custom screen menu 2100 on the image quality setting application execution screen 2000. The user command to select the custom screen menu 2100 may be input, for example, through the user input unit 323 of the external device 300.

Alternatively, as shown in (5-2) of FIG. 5, when the user input unit 123 of the image display device 100 is operated, the controller 170 of the image display device 100 may control the display 180 to display a control screen 3000 in an OSD manner.

The image quality setting process of FIG. 4 may be initiated in response to selection of a setting menu 3100 by the user through the user input unit 123 on the control screen 3000. Upon selection of the setting menu 3100, if the image quality setting application has not yet been executed, the controller 170 of the image display device 100 or the controller 370 of the external device 300 may execute the image quality setting application and immediately initiate the image quality setting process.

Alternatively, although not shown, when the image quality setting application is executed when no user-preferred image quality setting value is stored in the storage unit 140 of the image display device 100 and/or the storage unit 340 of the external device 300, the image quality setting application may automatically initiate the image quality setting process.

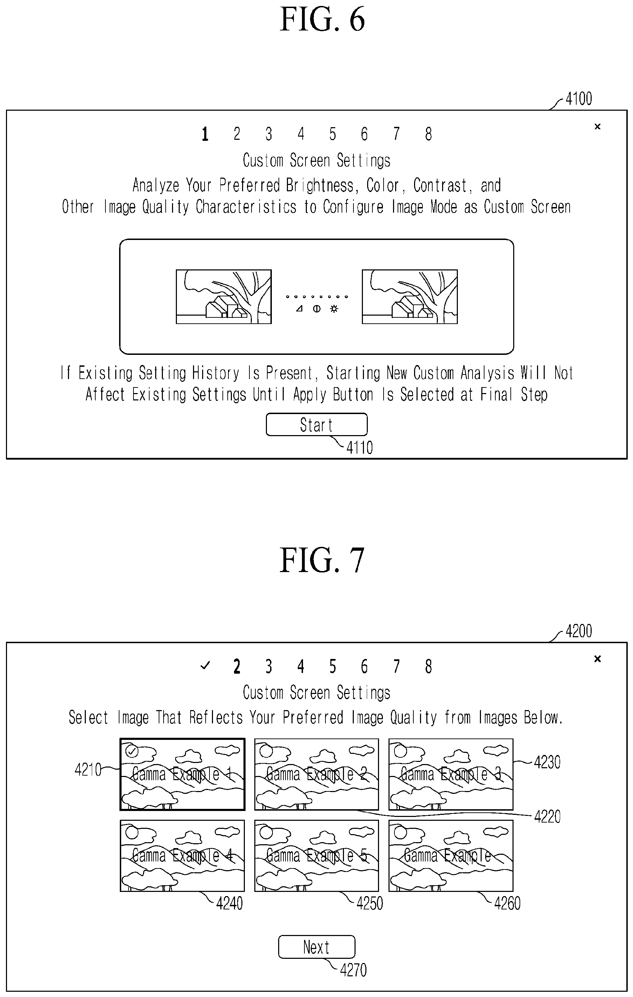

Hereinafter, with reference to FIGS. 6 to 13, the image quality setting process of FIG. 4 will be described in more detail. FIGS. 6 to 13 show examples of image quality setting screens that may be displayed during the image quality setting process of FIG. 4.

As shown in FIG. 6, when the image quality setting process is initiated, the image quality setting application may display an image quality setting screen 4100 (i.e., an image quality setting process start screen) on the display 180 of the image display device 100.

The image quality setting process may begin in earnest in response to a user command to select a start icon 4110 on the image quality setting process start screen 4100.

The user command to select a start icon 4110 may be input through the user input unit 323 of the external device 300 or the user input unit 123 of the image display device. It will be appreciated that the user selections described below may also be made through the user input unit 323 of the external device 300 or the user input unit 123 of the image display device.

As illustrated in FIG. 7, the image quality setting application may display an image quality setting screen 4200 (i.e., a gamma setting screen) to determine the user's gamma preference tendency on the display 180 of the image display device 100.

The gamma setting screen 4200 may display a plurality of example images 4210 to 4260 to which different gamma characteristics are applied using a template image in which changes in a gamma characteristic (or gamma value) may be clearly visually represented. In FIG. 7, the six example images 4210 to 4260 are shown being displayed, but it will be appreciated that more or fewer example images may be displayed.

The gamma characteristic corresponding to each of the plurality of example images 4210 to 4260 may be selected by taking into account the display specification information described above. That is, a plurality of representative gamma characteristics may be selected within the range of gamma characteristics allowed in the image display device 100, and the plurality of example images 4210 to 4260 may be generated by respectively applying the plurality of representative gamma characteristics to the template image.

The gamma characteristic corresponding to each of the plurality of example images 4210 to 4260 may be selected by further considering the current ambient light brightness information described above. That is, each of the plurality of representative gamma characteristics selected based on the display specification information may be modified according to the current ambient light brightness information, and the plurality of modified representative gamma characteristics may be respectively applied to the template image, thereby generating the plurality of example images 4210 to 4260.

In response to a user command to select a next icon 4270 after one of the plurality of example images is selected by the user on the gamma setting screen 4200, the image quality setting application may complete the identification of the user's gamma preference tendency.

The image quality setting application may use the gamma characteristic corresponding to the selected example image in deriving the user-preferred image quality setting value.

When the image quality setting process is initiated, the image quality setting screen of FIG. 7 (i.e., a gamma setting screen) may be displayed immediately without displaying the image quality setting process start screen 4100 of FIG. 6.

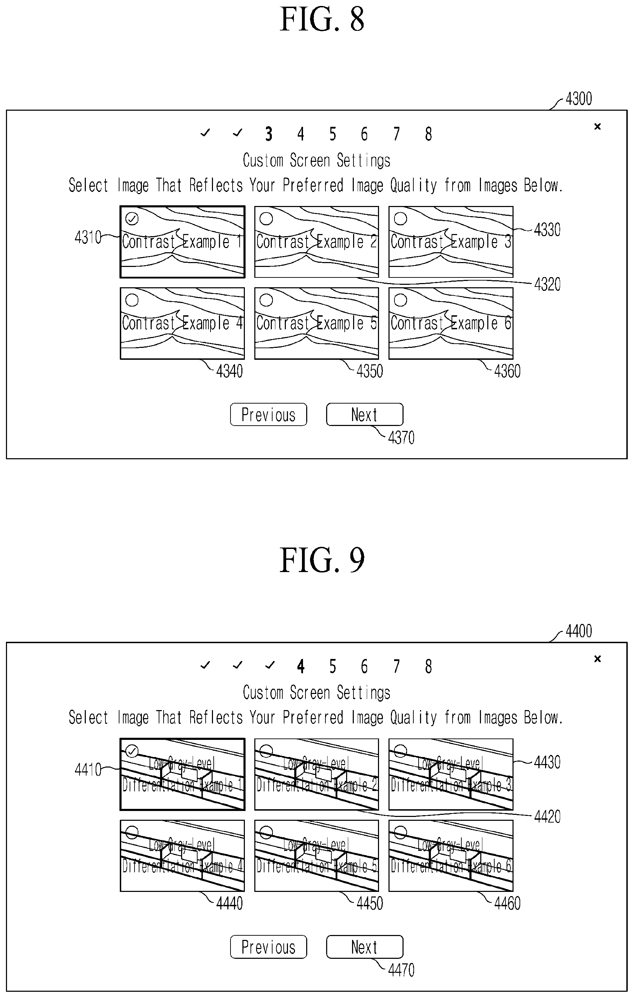

Once the identification of the user's gamma preference tendency is completed, the image quality setting application may display an image quality setting screen 4300 (i.e., a contrast setting screen) to determine the user's contrast preference tendency on the display 180 of the image display device 100, as shown in FIG. 8.

The contrast setting screen 4300 may display a plurality of example images 4310 to 4360 to which different contrast characteristics are applied using a template image in which changes in a contrast characteristic (or contrast value) may be clearly visually represented and to which the previously selected gamma characteristic is applied. In FIG. 8, six example images 4310 to 4360 are shown being displayed, but it will be appreciated that more or fewer example images may be displayed.

The contrast characteristic corresponding to each of the plurality of example images 4310 to 4360 may be selected by further considering the display specification information described above. That is, a plurality of representative contrast characteristics may be selected within the range of contrast characteristics allowed in the image display device 100, and the plurality of example images 4310 to 4360 may be generated by respectively applying the plurality of representative contrast characteristics to the template image.

The contrast characteristic corresponding to each of the plurality of example images 4310 to 4360 may be selected by further considering the current ambient light brightness information described above. That is, each of the plurality of representative contrast characteristics selected based on the display specification information may be modified according to the current ambient light brightness information, and the plurality of modified representative contrast characteristics may be respectively applied to the template image, thereby generating the plurality of example images 4310 to 4360.

The contrast characteristic corresponding to each of the plurality of example images 4310 to 4360 may be selected by further considering the previously selected gamma characteristic. In other words, contrast characteristics that match the previously selected gamma characteristic may be selected.

In response to a user command to select a next icon 4370 after one of the plurality of example images is selected by the user on the contrast setting screen 4300, the image quality setting application may complete the identification of the user's contrast preference tendency.

The image quality setting application may use the contrast characteristic corresponding to the selected example image in deriving the user-preferred image quality setting value.

When the user's contrast preference tendency has been identified, the image quality setting application may display, on the display 180 of the image display device 100, an image quality setting screen 4400 (i.e., a low-gray-level differentiation setting screen) for identifying the user's low-gray-level differentiation preference tendency, as illustrated in FIG. 9.

On the low-gray-level differentiation setting screen 4400, a plurality of example images 4410 to 4460 to which different low-gray-level differentiation characteristics are applied using a template image in which changes in a low-gray-level differentiation characteristic (or low-gray-level differentiation value) may be clearly visually represented and to which the previously selected gamma characteristic and contrast characteristic are cumulatively applied may be displayed. In FIG. 9, the six example images 4410 to 4460 are shown being displayed, but it will be appreciated that more or fewer example images may be displayed.

The low-gray-level differentiation characteristic corresponding to each of the plurality of example images 4410 to 4460 may be selected by further considering the display specification information described above. That is, a plurality of representative low-gray-level differentiation characteristics may be selected within the range of low-gray-level differentiation characteristics allowed in the image display device 100, and the plurality of example images 4410 to 4460 may be generated by respectively applying the plurality of representative low-gray-level differentiation characteristics to the template image.

The low-gray-level differentiation characteristic corresponding to each of the plurality of example images 4410 to 4460 may be selected by further considering the current ambient light brightness information described above. That is, each of the plurality of representative low-gray-level differentiation characteristics selected based on the display specification information may be modified according to the current ambient light brightness information, and the plurality of modified representative low-gray-level differentiation characteristics may be respectively applied to the template image, thereby generating the plurality of example images 4410 to 4460.

The low-gray-level differentiation characteristic corresponding to each of the plurality of example images 4410 to 4460 may be selected by further considering the previously selected gamma characteristic and contrast characteristic. In other words, low-gray-level differentiation characteristics that match the previously selected gamma characteristic and contrast characteristic may be selected.

In response to a user command to select a next icon 4470 after one of the plurality of example images is selected by the user on the low-gray-level differentiation setting screen 4400, the image quality setting application may complete the identification of the user's low-gray-level differentiation preference tendency.

The image quality setting application may use the low-gray-level differentiation characteristic corresponding to the selected example image in deriving the user-preferred image quality setting value.

When the user's low-gray-level differentiation preference tendency has been identified, the image quality setting application may display, on the display 180 of the image display device 100, an image quality setting screen 4500 (i.e., a color temperature setting screen) for identifying the user's color temperature preference tendency, as illustrated in FIG. 10.

On the color temperature setting screen 4500, a plurality of example images 4510 to 4560 to which different color temperature characteristics are applied using a template image in which changes in a color temperature characteristic (or color temperature value) may be clearly visually represented and to which the previously selected gamma characteristic, contrast characteristic, and low-gray-level differentiation characteristic are cumulatively applied may be displayed. In FIG. 10, the six example images 4510 to 4560 are shown being displayed, but it will be appreciated that more or fewer example images may be displayed.

The color temperature characteristic corresponding to each of the plurality of example images 4510 to 4560 may be selected by further considering the display specification information described above. That is, a plurality of representative color temperature characteristics may be selected within the range of color temperature characteristics allowed in the image display device 100, and the plurality of example images 4510 to 4560 may be generated by respectively applying the plurality of representative color temperature characteristics to the template image.

The color temperature characteristic corresponding to each of the plurality of example images 4510 to 4560 may be selected by further considering the current ambient light brightness information described above. That is, each of the plurality of representative color temperature characteristics selected based on the display specification information may be modified according to the current ambient light brightness information, and the plurality of modified representative color temperature characteristics may be respectively applied to the template image, thereby generating the plurality of example images 4510 to 4560.

The color temperature characteristic corresponding to each of the plurality of example images 4510 to 4560 may be selected by further considering the previously selected gamma characteristic, contrast characteristic, and low-gray-level differentiation characteristic. In other words, color temperature characteristics that match the previously selected gamma characteristic, contrast characteristic, and low-gray-level differentiation characteristic may be selected.

In response to a user command to select a next icon 4570 after one of the plurality of example images is selected by the user on the color temperature setting screen 4500, the image quality setting application may complete the identification of the user's color temperature preference tendency.

The image quality setting application may use the color temperature characteristic corresponding to the selected example image in deriving the user-preferred image quality setting value.

When the user's color temperature preference tendency has been identified, the image quality setting application may display, on the display 180 of the image display device 100, an image quality setting screen 4600 (i.e., a color saturation setting screen) for identifying the user's color saturation preference tendency, as illustrated in FIG. 11.

On the color saturation setting screen 4600, a plurality of example images 4610 to 4660 to which different color saturation characteristics are applied using a template image in which changes in a color saturation characteristic (or color saturation value) may be clearly visually represented and to which the previously selected gamma characteristic, contrast characteristic, low-gray-level differentiation characteristic, and color temperature characteristic are cumulatively applied may be displayed. In FIG. 11, the six example images 4610 to 4660 are shown being displayed, but it will be appreciated that more or fewer example images may be displayed.

The color saturation characteristic corresponding to each of the plurality of example images 4610 to 4660 may be selected by further considering the display specification information described above. That is, a plurality of representative color saturation characteristics may be selected within the range of color saturation characteristics allowed in the image display device 100, and the plurality of example images 4610 to 4660 may be generated by respectively applying the plurality of representative color saturation characteristics to the template image.

The color saturation characteristic corresponding to each of the plurality of example images 4610 to 4660 may be selected by further considering the current ambient light brightness information described above. That is, each of the plurality of representative color saturation characteristics selected based on the display specification information may be modified according to the current ambient light brightness information, and the plurality of modified representative color saturation characteristics may be respectively applied to the template image, thereby generating the plurality of example images 4610 to 4660.

The color saturation characteristic corresponding to each of the plurality of example images 4610 to 4660 may be selected by further considering the previously selected gamma characteristic, contrast characteristic, low-gray-level differentiation characteristic, and color temperature characteristic. That is, color saturation characteristics that match the previously selected gamma characteristic, contrast characteristic, low-gray-level differentiation characteristic, and color temperature characteristic may be selected.

In response to a user command to select a next icon 4670 after one of the plurality of example images is selected by the user on the color saturation setting screen 4600, the image quality setting application may complete the identification of the user's color saturation preference tendency.

The image quality setting application may use the color saturation characteristic corresponding to the selected example image in deriving the user-preferred image quality setting value.

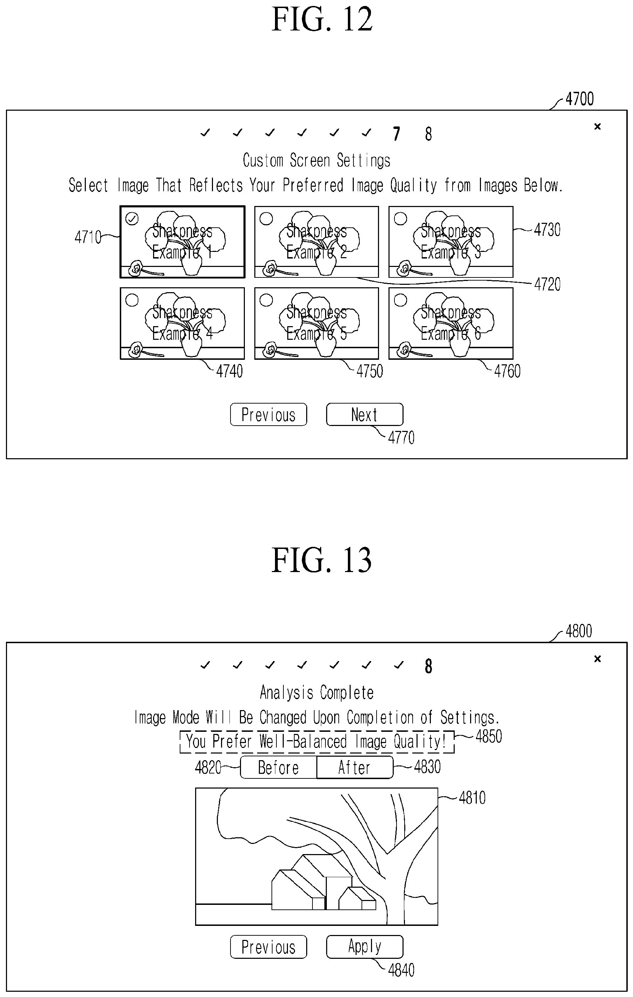

When the user's color saturation preference tendency has been identified, the image quality setting application may display, on the display 180 of the image display device 100, an image quality setting screen 4700 (i.e., a sharpness setting screen) for identifying the user's sharpness preference tendency, as illustrated in FIG. 12.

On the sharpness setting screen 4700, a plurality of example images 4710 to 4760 to which different sharpness characteristics are applied using a template image in which changes in a sharpness characteristic (or sharpness value) may be clearly visually represented and to which the previously selected gamma characteristic, contrast characteristic, low-gray-level differentiation characteristic, color temperature characteristic, and color saturation characteristic are cumulatively applied may be displayed. In FIG. 12, the six example images 4710 to 4760 are shown being displayed, but it will be appreciated that more or fewer example images may be displayed.

The sharpness characteristic corresponding to each of the plurality of example images 4710 to 4760 may be selected by further considering the display specification information described above. That is, a plurality of representative sharpness characteristics may be selected within the range of sharpness characteristics allowed in the image display device 100, and the plurality of example images 4710 to 4760 may be generated by respectively applying the plurality of representative sharpness characteristics to the template image.

The sharpness characteristic corresponding to each of the plurality of example images 4710 to 4760 may be selected by further considering the current ambient light brightness information described above. That is, each of the plurality of representative sharpness characteristics selected based on the display specification information may be modified according to the current ambient light brightness information, and the plurality of modified representative sharpness characteristics may be respectively applied to the template image, thereby generating the plurality of example images 4710 to 4760.

The sharpness characteristic corresponding to each of the plurality of example images 4710 to 4760 may be selected by further considering the previously selected gamma characteristic, contrast characteristic, low-gray-level differentiation characteristic, color temperature characteristic, and color saturation characteristic. That is, sharpness characteristics that match the previously selected gamma characteristic, contrast characteristic, low-gray-level differentiation characteristic, color temperature characteristic, and color saturation characteristic may be selected.

In response to a user command to select a next icon 4770 after one of the plurality of example images is selected by the user on the sharpness setting screen 4700, the image quality setting application may complete the identification of the user's sharpness preference tendency.

The image quality setting application may use the sharpness characteristic corresponding to the selected example image in deriving the user-preferred image quality setting value.

When the user's sharpness preference tendency has been identified, the image quality setting application may derive the user-preferred image quality setting value (i.e., user-customized image quality setting value) based on the user-preferred image quality preference tendency identified through the plurality of image quality setting screens described above.

As illustrated in FIG. 13, the image quality setting application may display, on the display 180 of the image display device 100, an image quality setting screen 4800 (i.e., an image quality setting result screen) for receiving confirmation as to whether to apply the user-preferred image quality setting value.

The image quality setting result screen 4800 may display a template image 4810 to which the derived user-preferred image quality setting value is applied.

The image quality setting result screen 4800 may display a before-change icon 4820 and an after-change icon 4820.

When the before-change icon 4820 is selected by the user, the template image before the derived user-preferred image quality setting value is applied may be displayed, and when the after-change icon 4830 is selected by the user, the template image after the derived user-preferred image quality setting value is applied may be displayed. The user may compare these two template images and determine whether to apply the user-preferred image quality setting value. It will be appreciated that the template image before the derived user-preferred image quality setting value is applied and the template image after the derived user-preferred image quality setting value is applied may be displayed simultaneously.

In response to a user command to select an apply icon 4840 on the image quality setting result screen 4800, the image quality setting application may apply the derived user-preferred image quality setting value to the image display device 100.

The image quality setting application may store the derived user-preferred image quality setting value in the storage unit 140 of the image display device 100 and/or the storage unit 340 of the external device 300. When ambient light brightness information and/or display specification information are considered when the user-preferred image quality setting value is derived, the user-preferred image quality setting value may be stored together with the ambient light brightness information and/or display specification information. The ambient light brightness information and display specification information stored together with the user-preferred image quality setting value will be referred to as the reference ambient light brightness information and reference display specification information, respectively.

One of the template images described with reference to FIGS. 7 through 13 may be the same as at least one of the remaining template images, and the template images may all be different from each other.

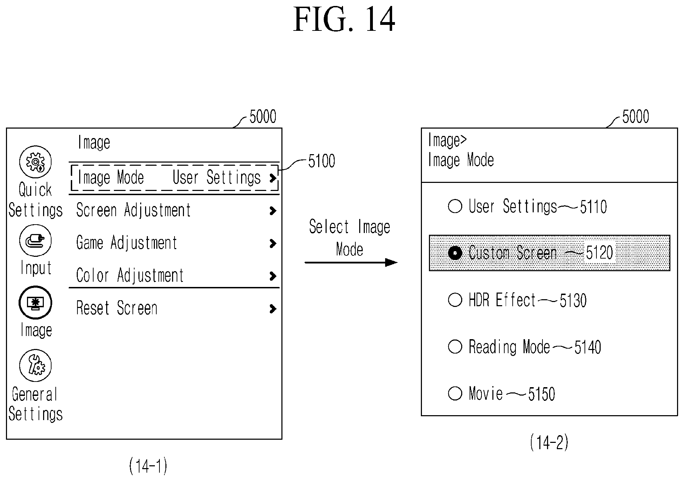

The use of the stored user-preferred image quality setting value will be described further with reference to FIG. 14. FIG. 14 illustrates an exemplary screen for allowing a user to configure display image quality in an image display device according to an aspect of the present disclosure.

As shown in (14-1) of FIG. 14, an image quality setting screen 5000 may be displayed on the image display device. The image quality setting screen 5000 may be displayed in response to a user command for configuring display image quality that is input to the image display device 100. The image quality setting screen 5000 may be displayed on the display 180 in an on-screen display (OSD) manner, either as a full screen or a partial screen.

The image quality setting screen 5000 of (14-1) in FIG. 14 may be displayed according to a user command regardless of the execution of the image quality setting application described above, and may be distinguished from the image quality setting screens of FIGS. 6 to 13 that are displayed when the image quality setting application is executed.

A plurality of menus may be displayed on the image quality setting screen 5000, and among the plurality of menus, an image mode menu 5100 will be described below.

When the image mode menu 5100 is selected by the user in the image quality setting screen 5000 of (14-1) of FIG. 14, a plurality of image quality modes 5110, 5120, 5130, 5140, and 5150 may be displayed on the image quality setting screen 5000 as shown in (14-2) of FIG. 14.

The plurality of image quality modes 5110, 5120, 5130, 5140, and 5150 may include an image quality mode 5120 according to the stored user-preferred image quality setting value.

When the image quality mode 5120 according to the stored user-preferred image quality setting value is selected on the image quality setting screen 5000, the controller 170 of the image display device 1000 may apply the stored user-preferred image quality setting value.

Therefore, the user may apply the stored user-preferred image quality setting value to the image display device 1000 without executing the image quality setting application.

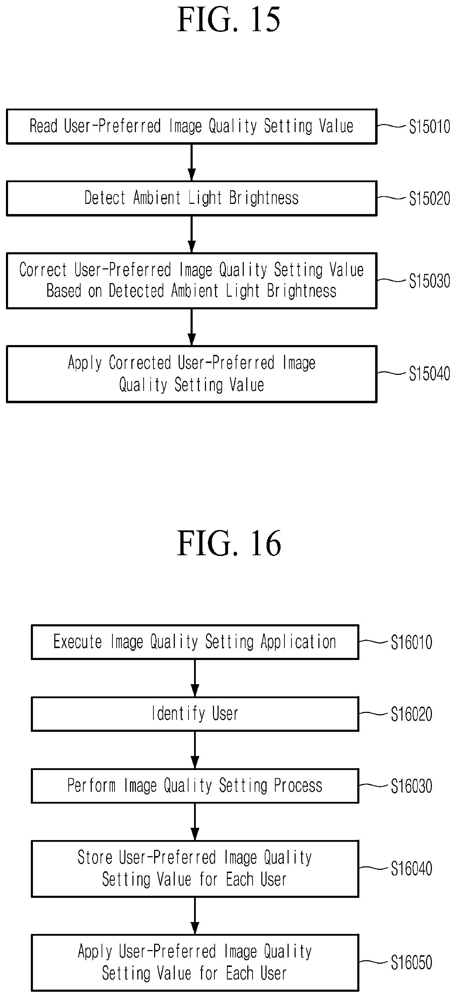

Hereinafter, the application of the user-preferred image quality setting value described above will be described further with reference to FIG. 15. FIG. 15 illustrates a flowchart of a process of applying a user-preferred image quality setting value in an image display device according to an aspect of the present disclosure.

The controller 170 of the image display device 100 may read the stored user-preferred image quality setting value and the reference ambient light brightness information stored together therewith (S15010).

The controller 170 of the image display device 100 may detect the current ambient light brightness through the ambient light sensor 153 (S15020).

The controller 170 of the image display device 100 may compare the current ambient light brightness with the reference ambient light brightness information and correct the user-preferred image quality setting value based on the comparison result (S15030).

For example, when the current ambient light brightness is brighter than the reference ambient light brightness, the user-preferred image quality setting value may be adjusted such that the image is displayed more brightly and with more saturated colors on the image display device 100. When the current ambient light brightness is darker than the reference ambient light brightness, the user-preferred image quality setting value may be adjusted such that the image is displayed less brightly and with less saturated colors on the image display device 100.

The controller 170 of the image display device 100 may apply the corrected user-preferred image quality setting value (S15040).

The image display device 100 may be used by a plurality of users, and the plurality of users may have different preferred image qualities. Accordingly, with reference to FIG. 16, the case in which different display image quality configurations for respective users are performed on an image display device will be described. FIG. 16 illustrates a flowchart of a process of configuring display image quality of an image display device according to an aspect of the present disclosure.

First, an image quality setting application according to the present disclosure may be executed (S16010).

The image quality setting application may identify the current user (S16020). The image quality setting application may identify the current user by recognizing the user's face captured through the camera 155. Alternatively, the image quality setting application may allow the image quality setting process described above to be initiated after login and identify the current user by using login information for each user.

The image quality setting application may perform the image quality setting process described above for each user (S16030).

The image quality setting application may store a user-preferred image quality setting value for each user (S16040).

After storing the user-preferred image quality setting value for each user, the controller 170 of the image display device 100 may identify the current user by recognizing the face of the user captured through the camera 155 or by using the login information input to the image quality setting application, and may read and apply the user-preferred image quality setting value corresponding to the identified user (S16050).

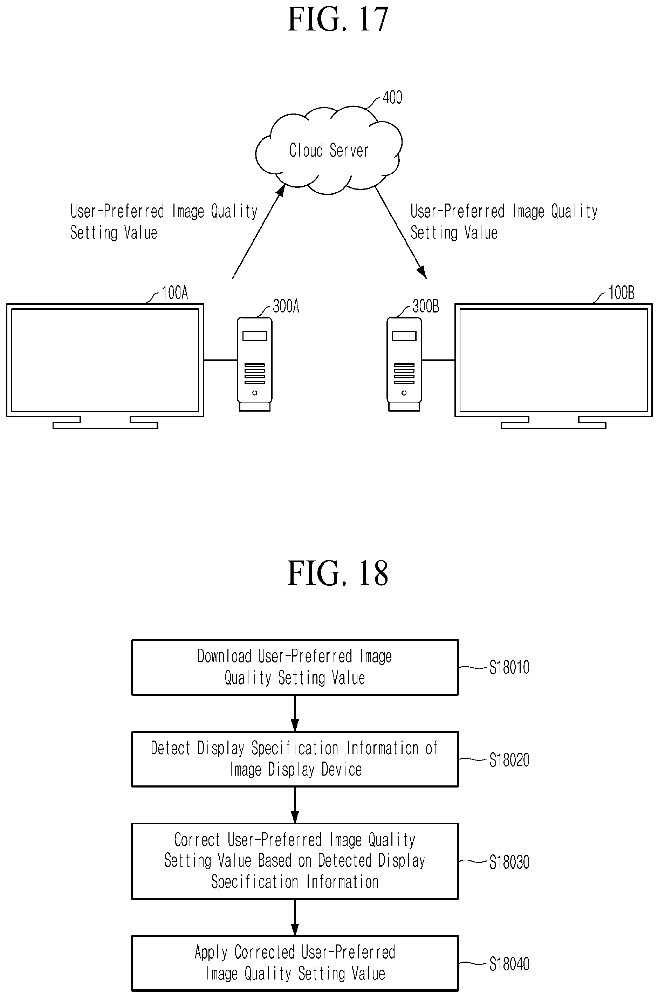

The user-preferred image quality setting value derived and stored for one image display device may be shared with other image display devices. This will be described further with reference to FIG. 17. FIG. 17 illustrates an image display device and an external device according to an aspect of the present disclosure.

For a first image display device 100A according to the present disclosure, a user-preferred image quality setting value may be uploaded to a cloud server 400. The user-preferred image quality setting value may also be uploaded along with the corresponding reference display specification information.

A first external device 300A connected to the first image display device 100A may connect to the cloud server 400 and upload the user-preferred image quality setting value to the cloud server 400. Alternatively, the first image display device 100A may directly connect to the cloud server 400 and upload the user-preferred image quality setting value to the cloud server 400.

The user-preferred image quality setting value uploaded to the cloud server 400 may be downloaded for a second image display device 100B according to the present disclosure. The user-preferred image quality setting value may also be downloaded along with the corresponding reference display specification information.

A second external device 300B connected to the second image display device 100B may connect to the cloud server 400 to download the user-preferred image quality setting value to the second external device 300B and/or the second image display device 100B. Alternatively, the second image display device 100B may directly connect to the cloud server 400 to download the user-preferred image quality setting value to the second external device 300B and/or the second image display device 100B.

The use of the user-preferred image quality setting value downloaded for the second image display device 100B will be described further with reference to FIG. 18. FIG. 18 illustrates a flowchart of a process of applying a user-preferred image quality setting value in an image display device according to an aspect of the present disclosure.

The controller 170 of the second image display device 100B may read the downloaded user-preferred image quality setting value and the reference display specification information downloaded along therewith (S18010).

The controller 170 of the second image display device 100B may determine its display specification information (S18020).

The controller 170 of the second image display device 100B may compare its own display specification information with the reference display specification information and correct the user-preferred image quality setting value based on the comparison result (S18030).

For example, when the maximum output brightness according to its own display specification information is lower than the maximum output brightness according to the reference display specification information, the user-preferred image quality setting value may be corrected to adjust the gamma characteristic and/or contrast characteristic to prevent brightness saturation.

The controller 170 of the second image display device 100B may apply the corrected user-preferred image quality setting value (S18040).

It will be appreciated that the controller 170 of the second image display device 100B may correct the user-preferred image quality setting value by taking into account not only the reference display specification information but also the reference ambient light brightness information described with reference to FIG. 15.

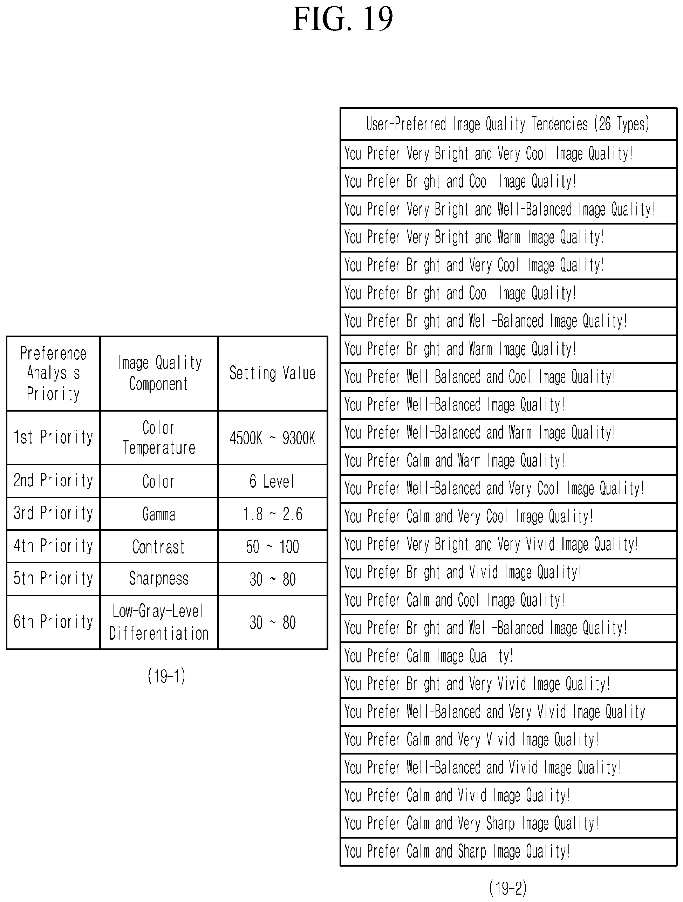

The image quality setting application may analyze the user-preferred image quality tendency corresponding to the derived user-preferred image quality setting value on the image quality setting screen 4800 of FIG. 13 and display a guidance message 4850 based on the analysis result. The analysis of the user-preferred image quality preference tendency will be described with further reference to FIG. 19. FIG. 19 illustrates an example of an analysis of a user-preferred image quality tendency according to an aspect of the present disclosure.

The image quality setting application may determine priorities of the image quality components for analysis of a user-preferred image quality tendency, as shown in (19-1) of FIG. 19, and analyze the user-preferred image quality preference tendency based on the user-preferred image quality setting value for each image quality component according to the priorities.

The image quality setting application may store a preset list of guidance messages for user-preferred image quality tendencies, as shown in (19-2) of FIG. 19. The image quality setting application may display a guidance message corresponding to the user-preferred image quality preference tendency from the list of guidance messages, as shown in FIG. 13.

Various aspects may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof.

## Claims

1. An image display device comprising:
a display;
a storage unit;
an interface configured to connect to at least one of an external device or an external server; and
a controller configured to:
display a plurality of first example images in which a plurality of characteristics of a first image quality component are each applied to a first template image,
display a plurality of second example images in which a plurality of characteristics of a second image quality component are each applied to a second template image, and
derive and store a user-preferred image quality setting value based on a first image quality component characteristic corresponding to a first example image selected by a user among the plurality of first example images and a second image quality component characteristic corresponding to a second example image selected by the user among the plurality of second example images.

2. The image display device of claim 1, wherein the controller is configured to display the plurality of second example images in response to a first example image being selected by the user.

3. The image display device of claim 2, wherein the first image quality component characteristic corresponding to the selected first example image is applied to the plurality of second example images.

4. The image display device of claim 3, wherein the controller displays a plurality of third example images in which a plurality of characteristics of a third image quality component are each applied to a third template image, and derives the user-preferred image quality setting value based further on a third image quality component characteristic corresponding to a third example image selected by the user among the plurality of third example images.

5. The image display device of claim 4, wherein the controller is configured to display the plurality of third example images in response to a second example image being selected by the user.

6. The image display device of claim 5, wherein the first image quality component characteristic corresponding to the selected first example image and the second image quality component characteristic corresponding to the selected second example image are applied to the plurality of third example images.

7. The image display device of claim 1, further comprising an ambient light sensor,
wherein the controller stores ambient light brightness at a time of deriving the user-preferred image quality setting value as reference ambient light brightness of the user-preferred image quality setting value.

8. The image display device of claim 7, wherein the controller corrects the user-preferred image quality setting value based on a comparison between ambient light brightness currently detected by the ambient light sensor and the reference ambient light brightness, and applies the corrected user-preferred image quality setting value to the display.

9. The image display device of claim 7, wherein the controller stores display specification information of the display as reference display specification information of the user-preferred image quality setting value.

10. The image display device of claim 9, wherein the controller is configured to upload the user-preferred image quality setting value, the reference ambient light brightness, and the reference display specification information to the external server.

11. The image display device of claim 1, further comprising a camera,
wherein the controller identifies the user by recognizing the user's face captured through the camera and derives and stores a user-preferred image quality setting value for each user.

12. An image display device comprising:
a display;
a storage unit;
an interface configured to connect to at least one of an external device or an external server; and
a controller configured to:
download a user-preferred image quality setting value and reference display specification information from the external server, and
correct the user-preferred image quality setting value based on a comparison between the reference display specification information and specification information of the display, and apply the corrected user-preferred image quality setting value to the display.

13. The image display device of claim 12, further comprising an ambient light sensor,
wherein the controller downloads reference ambient light brightness from the external server, and further corrects the user-preferred image quality setting value based on a comparison between ambient light brightness currently detected by the ambient light sensor and the reference ambient light brightness, and applies the further corrected user-preferred image quality setting value to the display.

14. A control method of an image display device, the control method comprising:
displaying a plurality of first example images in which a plurality of characteristics of a first image quality component are each applied to a first template image;
displaying a plurality of second example images in which a plurality of characteristics of a second image quality component are each applied to a second template image; and
deriving and storing a user-preferred image quality setting value based on a first image quality component characteristic corresponding to a first example image selected by a user among the plurality of first example images and a second image quality component characteristic corresponding to a second example image selected by the user among the plurality of second example images.

15. The control method of claim 14, further comprising storing ambient light brightness at a time of deriving the user-preferred image quality setting value as reference ambient light brightness of the user-preferred image quality setting value.

16. The control method of claim 15, further comprising correcting the user-preferred image quality setting value based on a comparison between ambient light brightness currently detected by an ambient light sensor and the reference ambient light brightness, and applying the corrected user-preferred image quality setting value to a display of the image display device.

17. The control method of claim 15, further comprising storing display specification information of the display of the image display device as reference display specification information of the user-preferred image quality setting value.

18. The control method of claim 17, further comprising uploading the user-preferred image quality setting value, the reference ambient light brightness, and the reference display specification information to an external server.

19. A control method of an image display device, the control method comprising:
connecting to an external server;
downloading a user-preferred image quality setting value and reference display specification information from the external server; and
correcting the user-preferred image quality setting value based on a comparison between the reference display specification information and specification information of a display, and applying the corrected user-preferred image quality setting value to the display.

20. The control method of claim 19, further comprising:
downloading reference ambient light brightness from the external server; and
further correcting the user-preferred image quality setting value based on a comparison between ambient light brightness currently detected by an ambient light sensor and the reference ambient light brightness, and applying the further corrected user-preferred image quality setting value to the display.
